# EUROPEAN PATENT SPECIFICATION

(11) **EP 0 666 015 B1**
(45) Date of publication and mention of the grant of the patent: **05.04.2000**
(21) Application number: 95200252.5
(22) Date of filing: 02.02.1995
(51) Int. Cl.: A01B 49/02, A01B 63/26

(54) **An agricultural machine**
Laudwirtschaftliche Maschine
Machine agricole

(30) Priority: 04.02.1994 NL 9400179
(43) Date of publication of application: 09.08.1995
(73) Proprietor: MAASLAND N.V., 3155 PD Maasland (NL)
(72) Inventor: Bom, Cornelis Johannes Gerardus, NL-3181 VC Rozenburg (NL)
(74) Representative: Corten, Maurice Jean F.M.

(56) References cited:
- EP-A- 0 170 156
- EP-A- 0 305 601
- EP-A- 0 333 150
- FR-A- 2 386 977

## Description

The present invention relates to an agricultural machine as described in the preamble of claim 1.

Such a machine is known from EP-PA-0 170 156. This machine has the disadvantage that the orientation of the further working device changes when it is pivoted around the horizontal imaginary axis. The present invention has for its object to improve such a machine at least in this respect. According to the invention, this is achieved when the machine comprises the features as described in the characterising part of claim 1.

From document EP-PA-0 305 601 there is known a machine provided with a further working device which are coupled to each other by means of a parallelogram construction. During work the parallelogram construction is fixed. In addition, the adjusting means according to the invention is designed as a telescopic adjusting mechanism which is changeable in length through a screw spindle.

A likewise essential part of the invention is the feature that the machine comprises at least one opening for mounting the lower end of a stepless adjusting mechanism which is capable of being incorporated exchangeably between the existing construction parts in the machine. Accordingly, the invention also comprises an agricultural machine which is provided with a frame part equipped with working members and, connected to this frame pivotably about a substantially horizontal imaginary axis extending transversely to the desired direction of travel, a further working device following the soil or ground surface, while the machine comprises at least one opening for mounting the lower end of a stepless adjusting mechanism which is capable of being incorporated exchangeably in the connection between the frame part and the further working device. In this manner, a standard production machine can simply be provided with an arrangement which advances the ease of operation and the well-functioning of the device, for instance, in the event that a farmer of advanced years can no longer summon the required effort to adjust the current further working device to a changed operating level of the working members accommodated in the frame. Ease of operation is also a matter of consideration to agricultural contractors who have to alter the said operating level regularly for different customers and/or types of soil. The telescopic adjusting mechanism is, according to the invention, adjustable in length by means of a screw spindle provided with connecting elements such as connecting bushes, through which a connecting pin can be fed transversely to the longitudinal direction of the adjusting mechanism, to constitute a swivel shaft, at least two of these connecting elements being mounted against the upper telescopic part of the adjusting mechanism and at least one of these connecting elements being mounted near the lower end of the adjusting mechanism's telescopic part which is movable with respect to the upper telescopic part. According to the invention, the construction parts of the machine are shaped such that, upon possible removal of the above-mentioned stepless adjusting mechanism, the machine can be immediately rearranged according to the usual manner without any supply of further construction parts being required.

The invention will now be further explained with reference to the accompanying drawings, in which:
Figure 1 shows a top plan view of a machine according to the invention in a condition where it is coupled to the hitch mechanism of a tractor;
Figure 2 is a sectional view taken on the line II-II in Figure 1;
Figure 3 is a view according to the arrow III in Figure 2;
Figure 4 is a view taken on the line IV-IV in Figure 2, and
Corresponding with the view of Figure 3, a partial representation of an alternative embodiment of the invention is depicted in Figure 5.

Corresponding parts in the drawings are marked by the same reference numbers. Moreover, the invention is by no means limited to the embodiments depicted and described here; these are only intended for illustration of the inventive idea.

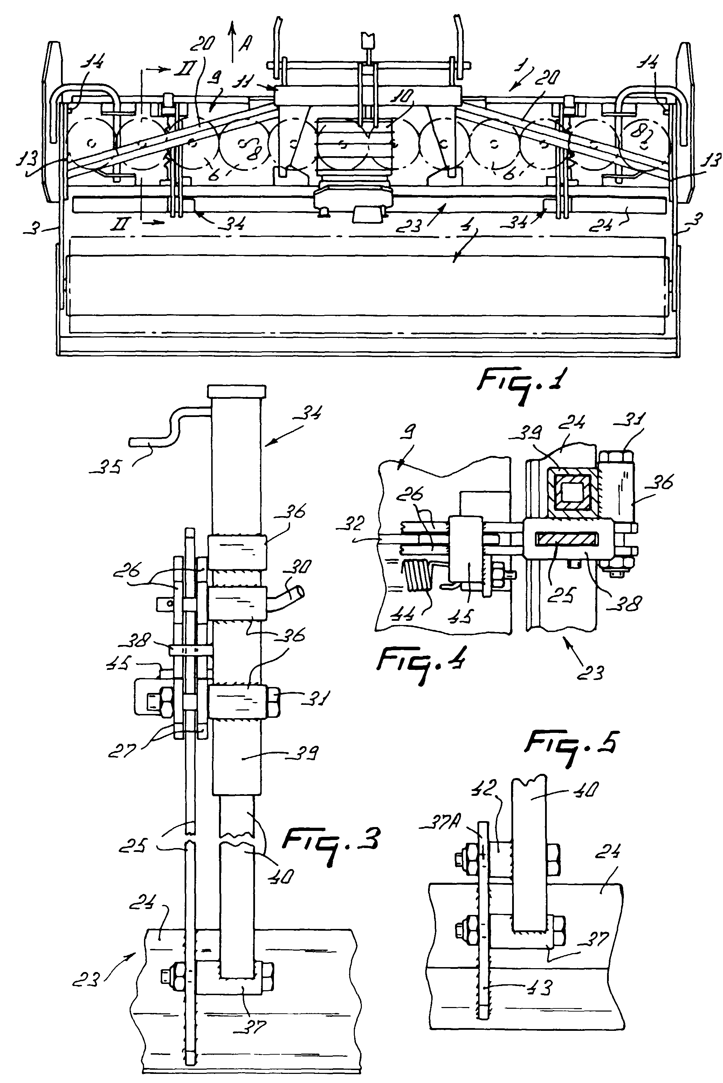

Figure 1 shows a rotary harrow 1, sometimes called a circular harrow, in a condition where it is coupled to the hitch mechanism of a tractor. On the rear side, the rotary harrow comprises a roller 4 which is integrated with the machine through a pair of arms 3. The rotary harrow 1 is a known per se soil cultivation implement for secondary soil working processes and, in the present 3 m wide embodiment, it comprises a dozen of soil working members 7 which are in intermeshing connection through gear wheels 6 accommodated in a tubular frame part 9 disposed transversely to the direction of travel, and which soil working members are drivable by, and rotatable about upwardly extending shafts 8. A working member 7 comprises a substantially horizontally extending carrier 12 to which, near its circumference, substantially downwardly extending soil working elements 15, called tines for short, are attached. The gear wheels 6 are mounted on the upper end of the upwardly extending shafts 8 which reach through the bottom of the frame 9 and which are bearing-supported therein. One of the two centremost shafts 8 also reaches through the top side of the tubular frame 9 to one of two gear wheels at right angles to each other and in constant mesh in a transmission case 10 mounted on the frame. For the purpose of driving the soil working members 7, the transmission case 10 comprises an outgoing stub shaft which is capable of being coupled to the power-take-off shaft of a tractor through a coupling shaft. The machine is provided with a trestle 11 placed centrally on the top side of the frame part 9, which trestle 11 is for coupling to the three-point hitch of a tractor. The present coupling trestle 11 includes, among other things, two upright plate-shaped supports 17 oriented in the direction of travel A, each of them being disposed in the vicinity of the lowermost coupling points 16 for coupling to the hitch of the tractor and each of them being attached to the frame part 9, at the top end of which supports there is mounted a carrier or connecting beam 19 oriented transversely to the direction of travel and bearing the coupling elements 18 for coupling to the top coupling arm of a three-point hitch. The frame part 9 is supported near its ends by the coupling trestle 11 through struts 20 extending from the front and near the top side of a plate-shaped support 17 sidewards and slightly rearwards. The tubular frame part 9 is on each end closed by an upwards directed plate 13 projecting from the frame part 9 upwards, while an arm 3 is pivotally attached to this plate through a stub shaft 14 disposed horizontally and on the top side of the frame part 9. The height of the frame part 9, and hence the working depth of the working members 7 with respect to the roller 4 is adjustable through a lock or stop pin insertable in a plurality of openings provided in the plate 13 on the rear side of the machine. In the present embodiment, the outer end of a strut 20 near the rear side of the frame part 9 is disposed against that part of the plate 13 which projects from this frame part 9 upwards.

The machine is also equipped with a further working device, in the present embodiment a crumbling-and-levelling device 23, which comprises a catching element 24 made up of a profiled plate and disposed in front of the roller 4 as well as in the vicinity of the rotary working members 7 and extending substantially horizontally, transversely to the direction of travel A at a certain optimum distance from the working members 7, and, still to be described, connecting elements placed between the frame part 9 and the plate 24. The plate 24 is supported through two supports 25 directed upwards, provided with holes directed horizontally and transversely to the direction of travel A, which supports are in the form of strips disposed at a certain distance from each other. The supports 25 are connected to the frame part 9 through strip-shaped connection arms 26, 27 oriented in the direction of travel A, which arms - as seen in a side view - are part of an articulated parallelogram construction 26 - 31. For this purpose, the connecting arms 25 are each near its front end connected, by means of a swivel shaft 28, 29 extending horizontally and transversely to the direction of travel, to a plate-shaped support 32 provided on the frame part 9 and oriented upwards and in the direction of travel. The pivots 28 and 29 are arranged in front of the row of rotary shafts 8 present in the machine, so that a ratio between the length of the arms 26, 27 and the expected values of travel in height by the plate 24 which is favourable for the operation of the crumbling device 23 is obtained. In the present embodiment, the connecting arms 26, 27 substantially extending in the direction of travel are individually designed as a pair, with each connecting arm of a pair 26, 27 being placed on a side of the upright support 32. As seen in a top plan view, a support 32 is disposed near the point of contact of a second and a third gear wheel 6, as counted from either extremity of the machine, but at least virtually within the tip circle of the third gear wheel. Approximately in the centre, as seen in a side view, there is disposed a plate-shaped support 32 provided with a cut-out on behalf of the rectilinearity of a strut 20. Likewise, the upper connecting arm 26 has a curvilinear shape for the same reason, with a first part of the connecting arm extending from the foremost and topmost pivot 29 downwards and rearwards, and a second part extending substantially rearwards and upwards. By means of a pin or nutted bolt construction 30, 31, each of the upper and lower connecting arms 26, 27 has its rear end pivoted to the upper and wider telescopic part 39 of a telescopic adjusting device 34 which is infinitely variable in length by means of a screw spindle. This device extends parallel to the supports 25, i.e. virtually vertically. Near this end, the connecting arms 26, 27 are provided with two holes 33 disposed one after the other in the direction of travel A. For this purpose, a set of three bushes 36 oriented horizontally and transversely to the direction of travel is mounted at the rear side of the telescopic adjusting device 34. The lower end of the adjusting device 34 is also provided with a bush 37 extending horizontally and transversely to the direction of travel. This bush extends in the direction of one lateral end of the machine as far as an upwardly directed support 25 for the crumbling plate 24. For this purpose, the support 25 is provided with an additional hole near the lower end.

Approximately halfway the vertical distance between two rear pivot points 30, 31 of a parallelogram construction 26 - 31, there is arranged a guide opening 38 made from a strong plate material and, as shown e.g. in the top plan view of Figure 4, having a rectangular opening suitable for the upright support element 25. An adjusting device 34 is, in the vicinity of its upper end, provided with a crank handle 35 capable of operating about a horizontal axis and, in the present embodiment, of being operated from a lateral extremity of the machine, by means of which crank handle a threaded shaft can be actuated through a right-angled transmission accommodated in this end. The lower part of this shaft, not shown in the drawings, is in engagement with the upper end of a narrower telescopic part 40 in which, in a central position, there is provided a hole which is also threaded and which operates in conjunction with the said shaft. To prevent this lower part 40 from co-rotating, the telescopic parts 39, 40 are of a rectangular design.

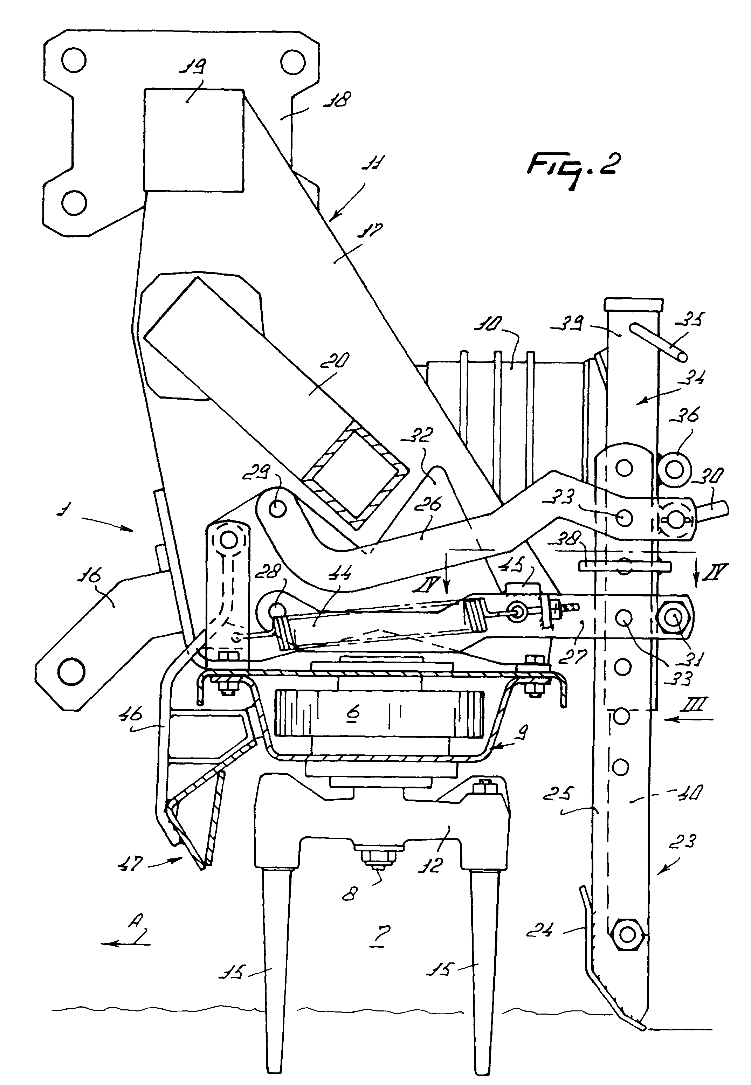

In an alternative embodiment schematically rendered in Figure 5, the lower telescopic part 40 of an adjusting device 34 can be of a design including two bushes 42 capable of being connected to a lug 43 fixed in position against the crumbling plate 24. In this embodiment, an adjusting device 34 fully replaces a support 25. In the position of pivot points 30, 31, however, spacer elements should be mounted between the arms of a pair 26, 27 and around the pivots 30, 31. The lug 43 serves as a point of attachment for supports in the event that an adjusting device 34 is left out. In the embodiment according to Figure 5, the guide opening 38 can be dropped. This embodiment has the advantage that a certain mass can be eliminated from the construction. Furthermore, the embodiment according to Figures 1 - 4, under the lowermost pivot 31, may be provided with a second guide opening 38 disposed on the upper telescopic part 39, so that the reaction forces are suitably distributed over, and applied to the upper telescopic part 39. In an advantageous embodiment represented in Figures 1, 2 and 4, the articulated parallelogram construction 26 - 31 is put under tension by a spring element. The spring element is designed as a tension spring 44, one end of which is fixed near the front of the frame part 9 and the other end is attached to the rear half of a lower connecting arm 26. The spring 44 is arranged at an angle of a few degrees to a horizontal, so that the crumbling device is loaded by a downwardly acting force component which increases by a possible amount of upward travel. A downward travel is limited by a horizontal strip part 45 connecting the lower pair of arms, which part in the position shown in Figure 2 is stopped against a horizontally extending part of the support plate 32. In the present embodiment, the front of the spring 44 is attached to a swivel arm 46 of a known per se protective device 47 for protection from stones occurring in the ground to be worked.

The operation of the machine is as follows.

In the most widely used embodiment, the connecting arms 26, 27 are connected to an upright support 25 through a removable or movable connection 30, 31. Herewith, the rearmost but one openings in each of the respective arms 26, 27 should preferably be used. While retaining the articulated parallelogram construction 26 - 31, through the holes provided in these arms, the crumbling plate 24 can be adjusted to a multiplicity of set working depths of the working members 7 such that the pivots 28 - 31 of the parallelogram construction are capable of remaining situated on an essentially horizontal line. For a suitable operation of the crumbling device at the desired working depth of the working members, one should aim at a horizontal alignment. With such a position, the fact is that it is unlikely that a necessary swivel movement of the levelling and crumbling device, e.g. as a result of an obstacle or a local irregularity in the ground surface, experiences an excessively counteracting force from the parallelogram construction tending to achieve horizontal positions of the imaginary lines 28 - 31 and 29, 30. With heavy soils where clods have a relatively long dwell time within range of the rotors 7, the crumbling plate 24 can be made to lean slightly forward by placing the rear top pivot(s) into a higher opening of the supports in order to facilitate the discharge of soil crumbled sufficiently. For this function, the plate 24, which might actually be designed as e.g. a tubular beam, has a suitable construction which includes, as seen in a side view, a vertically arranged part whose upper end is bent forward for returning any soil pushed up. At a height of approximately 5 cm from the lower end of the plate 24, the lower end portion of the vertical part merges into a part disposed at an angle of 45°, which part subsequently merges into an approximately 2 cm long final part disposed at an angle of 30° to a horizontal. Clods, of which the radius measured roughly is in excess of 5 cm, will experience in any case a forward thrust, directed to the rotors 7, by this construction.

According to the invention, while retaining the above possibilities, it is feasible to retrofit in an easy way a device 34, by means of which the height adjustment of the crumbling device 23 can be effected steplessly, or with a better alignment and without considerable effort. To this end, an upright support 25 should be fed once only, upon removal of connecting pins 30, 31, through the guide opening 38 on the upper telescopic part 39 of the telescopic device, and subsequently, the rearmost holes in the connecting arms 26, 27 should preferably be used for the hinge joint with the lower pair of bushes 36 on the rear side of the upper telescopic part 39. The lower bush 37 of the adjusting device 34 is connected to a support 25 in a hole provided for this purpose and situated as low as possible, preferably behind the crumbling plate 24. To make the crumbling plate 24 lean slightly forward, the rearmost and topmost pivot point can be placed in the topmost bush 36 of the adjusting device 34.

The principle of the above-mentioned device can also be adopted in all kinds of other machines or in other places in the machine where horizontal alignment of a parallelogram construction or optimum following of working elements being in contact with the ground surface, such as mowing elements, seed coulters and land rollers, is desired.

## Claims

1. An agricultural machine which is provided with a frame part equipped with working members and, connected to this frame pivotably about a substantially horizontal imaginary axis extending transversely to the desired direction of travel, a further working device (23) following the soil or ground surface and adjusting means (34), with the aid of which the further working device (23) at different set operative levels of the working members (7) is each time adjustable into a position where it has a like operating range, characterized in that the further working device (23) is connected to the frame part (9) through an articulated construction (26 - 31) including four swivel shafts (28 - 31) and two connecting arms (26, 27) extending at least substantially in the desired direction of travel (A), which construction at least approximates the shape of a parallelogram.

2. An agricultural machine according to claim 1, characterized in that the adjusting means (34) is designed as a telescopic adjusting device which is changeable in length through a screw spindle (35).

3. An agricultural machine according to claim 1 or 2, characterized in that the adjusting device (34) comprises an upper frame part (39) in which a lower telescopic part (40) of smaller sectional dimensions is fittingly and non-rotatably displaceable under the control of the screw spindle.

4. An agricultural machine according to one or more of the preceding claims, characterized in that the upper telescopic part (39) of the adjusting device (34) comprises two points of attachment (36) maintaining the parallelogram shape of the articulated construction (26 - 31), wherein the adjusting device (34) is pivoted to the rear ends of the connecting arms (26, 27).

5. An agricultural machine according to one or more of the preceding claims, characterized in that the adjusting device (34) extends parallel to the supports (25) of the further working device (23) and, near its lower end, is attached to the further working device (23).

6. An agricultural machine according to one or more of the preceding claims, characterized in that the adjusting device (34) is arranged in abutment against a side of the connecting arms (26, 27) disposed in the desired direction of travel and for this purpose is provided with bushes (36) mounted against its rear side, through which bushes the connecting pins or nutted bolts constituting the pivots (30, 31) are fed.

7. An agricultural machine according to one or more of the preceding claims, characterized in that each of the connecting arms (26, 27) near its rear end is provided with two holes disposed one after the other in the direction of travel.

8. An agricultural machine according to one or more of the preceding claims, characterized in that the further working device (23) comprises one or more fixed supports (25), each movable in vertical direction being fed through a guide opening (38) which is disposed on the upper telescopic part (39) of the adjusting device (34) and provided with a fitting opening, and the adjusting device (34) near its lower end is provided with a bush (37) reaching in lateral direction to the supports (25), through which bush a connecting pin or bolt is fed, forming the connection between the adjusting device (34) and the working device (23).

9. An agricultural machine according to one or more of the preceding claims, characterized in that the machine comprises at least one opening for mounting the lower end (37) of a stepless adjusting device (34) which is capable of being exchangeably included in the connection between the frame part (9) and the further working device (23).

10. An agricultural machine, according to one or a plurality of the preceding claims, provided with a frame part equipped with working members (7) and, connected to this frame part pivotably about a substantially horizontal imaginary axis extending transversely to the desired direction of travel, a further working device (23) following the soil or ground surface, characterized in that the machine comprises at least one opening for mounting the lower end (37) of a stepless adjusting device (34) which is capable of being exchangeably included in the connection between the frame part (9) and the further working device (23).

11. An agricultural machine according to one or more of the preceding claims, characterized in that the working members (7) of the machine are drivable, rotary soil working members bearing-supported in the machine frame.

12. An agricultural machine according to one or more of the preceding claims, characterized in that the further working device (23) comprises a catching element (24) extending substantially horizontally, transversely to the direction of travel A, for keeping soil being worked within the operating range of the working members (7) and for leaving the worked soil in a levelled condition.

## Patentansprüche

1. Landwirtschaftliche Maschine mit einem Rahmenteil, der mit Bearbeitungsgliedern und einer weiteren Bearbeitungsvorrichtung (23) versehen ist, die um eine im wesentlichen horizontale gedachte, quer zur gewünschten Fahrtrichtung liegende Achse schwenkbar mit diesem Rahmen verbunden ist und sich dem Boden oder der Bodenoberfläche anpaßt, sowie mit einer Stellvorrichtung (34), mittels der die weitere Bearbeitungsvorrichtung (23) bei unterschiedlich eingestellten Arbeitstiefen der Bearbeitungsglieder (7) jeweils in eine Position einstellbar ist, in der sie denselben Arbeitsbereich hat,
dadurch gekennzeichnet, daß die weitere Bearbeitungsvorrichtung (23) mit dem Rahmenteil (9) durch eine Gelenkvorrichtung (26 bis 31) verbunden ist, die vier Schwenkachsen (28 bis 31) und zwei Verbindungsarme (26, 27) aufweist, welche sich zumindest im wesentlichen in die gewünschte Arbeitsrichtung (A) erstrecken, wobei die Gelenkvorrichtung zumindest annähernd die Form eines Parallelogramms aufweist.

2. Landwirtschaftliche Maschine nach Anspruch 1, dadurch gekennzeichnet, daß die Stellvorrichtung (34) als teleskopische Stellvorrichtung ausgeführt ist, die durch eine Gewindespindel (35) längenverstellbar ist.

3. Landwirtschaftliche Maschine nach Anspruch 1 oder 2, dadurch gekennzeichnet, daß die Stellvorrichtung (34) einen oberen Rahmenteil (39) aufweist, in dem ein unterer Teleskopteil (40) geringeren Durchmessers von der Gewindespindel gesteuert mit geringem Spiel und drehfest verschiebbar ist.

4. Landwirtschaftliche Maschine nach einem oder mehreren der vorhergehenden Ansprüche,
dadurch gekennzeichnet, daß der obere Teleskopteil (39) der Stellvorrichtung (34) zwei Befestigungen (36) aufweist, die die Parallelogrammform der Gelenkvorrichtung (26 bis 31) aufrechterhalten, in der die Stellvorrichtung (34) zu den hinteren Enden der Verbindungsarme (26, 27) geschwenkt ist.

5. Landwirtschaftliche Maschine nach einem oder mehreren der vorhergehenden Ansprüche,
dadurch gekennzeichnet, daß sich die Stellvorrichtung (34) parallel zu den Stützen (25) der weiteren Berarbeitungsvorrichtung (23) erstreckt und nahe ihrem unteren Ende an der weiteren Bearbeitungsvorrichtung (23) befestigt ist.

6. Landwirtschaftliche Maschine nach einem oder mehreren der vorhergehenden Ansprüche,
dadurch gekennzeichnet, daß die Stellvorrichtung (34) an einer Seite der sich in der gewünschten Arbeitsrichtung erstreckenden Verbindungsarme (26, 27) anliegt und zu diesem Zweck Buchsen (36) aufweist, die an der Rückseite der Stellvorrichtung angebracht sind, und in die die Gelenke (30, 31) bildenden Verbindungsstifte oder Schrauben mit Muttern eingesetzt sind.

7. Landwirtschaftliche Maschine nach einem oder mehreren der vorhergehenden Ansprüche,
dadurch gekennzeichnet, daß jeder der Verbindungsarme (26, 27) nahe seinem hinteren Ende zwei Löcher aufweist, die in Arbeitsrichtung hintereinander angeordnet sind.

8. Landwirtschaftliche Maschine nach einem oder mehreren der vorhergehenden Ansprüche,
dadurch gekennzeichnet, daß die weitere Bearbeitungsvorrichtung (23) eine oder mehrere feste Stützen (25) aufweist, die jeweils in vertikaler Richtung bewegbar in eine am oberen Teleskopteil (39) der Stellvorrichtung (34) angeordnete Führungsöffnung (38) eingesetzt sind und eine passende Öffnung aufweisen, und daß die Stellvorrichtung (34) nahe ihrem unteren Ende eine Buchse (37) aufweist, die sich seitwärts bis zu den Stützen (25) erstreckt, und in die ein Verbindungsstift oder -bolzen eingesetzt ist, der die Verbindung zwischen der Stellvorrichtung (34) und der Bearbeitungsvorrichtung (23) herstellt.

9. Landwirtschaftliche Maschine nach einem oder mehreren der vorhergehenden Ansprüche,
dadurch gekennzeichnet, daß die Maschine mindestens eine Öffnung zur Befestigung des unteren Endes (37) einer stufenlosen Stellvorrichtung (34) aufweist, die in der Verbindung des Rahmenteiles (9) mit der weiteren Bearbeitungsvorrichtung (23) austauschbar anzuordnen ist.

10. Landwirtschaftliche Maschine nach einem oder mehreren der vorhergehenden Ansprüche mit einem Rahmenteil, der mit Bearbeitungsgliedern (7) und einer weiteren Bearbeitungsvorrichtung (23) versehen ist, die um eine im wesentlichen horizontale gedachte, quer zur gewünschten Arbeitsrichtung liegende Achse schwenkbar mit diesem Rahmenteil verbunden ist und sich dem Boden oder der Bodenoberfläche anpaßt,
dadurch gekennzeichnet, daß die Maschine mindestens eine öffnung zur Befestigung des unteren Endes (37) einer stufenlosen Stellvorrichtung (34) aufweist, die in der Verbindung des Rahmenteiles (9) mit der weiteren Bearbeitungsvorrichtung (23) austauschbar anzuordnen ist.

11. Landwirtschaftliche Maschine nach einem oder mehreren der vorhergehenden Ansprüche,
dadurch gekennzeichnet, daß die Bearbeitungsglieder (7) der Maschine antreibbare, drehbare Bodenbearbeitungsglieder sind, die im Maschinenrahmen gelagert und gehalten sind.

12. Landwirtschaftliche Maschine nach einem oder mehreren der vorhergehenden Ansprüche,
dadurch gekennzeichnet, daß die weitere Bearbeitungsvorrichtung (23) ein Auffangelement (24) aufweist, das sich im wesentlichen in horizontaler Richtung quer zur Fahrtrichtung A erstreckt und dazu dient, bearbeiteten Boden innerhalb des Arbeitsbereiches der Bearbeitungsglieder (7) zu halten und den bearbeiteten Boden in einem nivellierten Zustand zurückzulassen.

## Revendications

1. Machine agricole qui est munie d'une partie formant châssis équipée d'organes de travail et, relié à ce châssis, de manière pivotante autour d'un axe imaginaire sensiblement horizontal s'étendant transversalement à la direction de déplacement voulue, un autre dispositif de travail (23) suivant le sol ou la surface du sol et de moyens de réglage (34), à l'aide desquels l'autre dispositif de travail (23) peut, a différents réglages de niveau opérationnel des organes de travail (7), à chaque fois être réglé dans une position où il a une plage de fonctionnement analogue, caractérisée en ce que l'autre dispositif de travail (23) est relié à la partie de châssis (9) par l'intermédiaire d'une construction articulée (26-31) comportant quatre axes de pivotement (28-31) et deux bras de liaison (26, 27) s'étendant au moins sensiblement dans la direction de déplacement voulue (A), laquelle construction a approximativement la forme d'un parallélogramme.

2. Machine agricole selon la revendication 1, caractérisée en ce que les moyens de réglage (34) sont conçus sous la forme d'un dispositif de réglage télescopique qui peut changer de longueur par l'intermédiaire d'une broche à pas de vis (35).

3. Machine agricole selon la revendication 1 ou 2, caractérisée en ce que le dispositif de réglage (34) comporte une partie de châssis supérieure (39) dans laquelle une partie télescopique inférieure (40), ayant des dimensions en coupe plus petites, peut se déplacer de manière serrée et non-rotative sous la commande de la broche à pas de vis.

4. Machine agricole selon l'une quelconque des revendications précédentes, caractérisée en ce que la partie télescopique supérieure (39) du dispositif de réglage (34) comporte deux points de fixation (36) maintenant la forme de parallélogramme de la construction articulée (26-31), le dispositif de réglage (34) étant pivotant sur les extrémités arrière du bras de liaison (26, 27).

5. Machine agricole selon l'une quelconque des revendications précédentes, caractérisée en ce que le dispositif de réglage (34) s'étend parallèlement au support (25) de l'autre dispositif de travail (23) et, à proximité de son extrémité inférieure, est fixé sur l'autre dispositif de travail (23).

6. Machine agricole selon l'une quelconque des revendications précédentes, caractérisée en ce que le dispositif de réglage (34) est agencé en butée contre un côté du bras de liaison (26, 27) disposé dans la direction de déplacement voulue et, à cet effet, est muni de bagues (36) montées contre son côté arrière, bagues à travers lesquelles sont acheminés les axes de liaison ou boulons munis d'un écrou constituant les pivots (30, 31).

7. Machine agricole selon l'une quelconque des revendications précédentes, caractérisée en ce que chacun des bras de liaison (26, 27), à proximité de son extrémité arrière, est muni de deux trous disposés l'un après l'autre dans la direction de déplacement.

8. Machine agricole selon l'une quelconque des revendications précédentes, caractérisée en ce que l'autre dispositif de travail (23) comporte un ou plusieurs supports fixés (25), chacun étant mobile dans une direction verticale et acheminé à travers une ouverture de guidage (38) qui est disposée sur la partie télescopique supérieure (39) du dispositif de réglage (34) et étant muni d'une ouverture d'agencement, et le dispositif de réglage (34) à proximité de son extrémité inférieure est muni d'une bague (37) atteignant dans la direction latérale les supports (25), bague à travers laquelle un axe de liaison ou un boulon est acheminé, formant la liaison entre le dispositif de réglage (34) et le dispositif de travail (23).

9. Machine agricole selon l'une quelconque des revendications précédentes, caractérisée en ce que la machine comporte au moins une ouverture destinée au montage de l'extrémité inférieure (37) d'un dispositif de réglage continu (34) qui est capable d'être inclus de manière échangeable dans la liaison existant entre la partie de châssis (9) et l'autre dispositif de travail (23).

10. Machine agricole selon l'une quelconque des revendications précédentes, munie d'une partie de châssis équipée d'organes de travail (7) et, relié à cette partie de châssis, de manière pivotante autour d'un axe imaginaire sensiblement horizontal s'étendant transversalement par rapport à la direction de déplacement voulue, un autre dispositif de travail (23) suivant le sol ou la surface du sol, caractérisée en ce que la machine comporte au moins une ouverture destinée au montage de l'extrémité inférieure (37) d'un dispositif de réglage continu (34) qui est capable d'être inclus de manière échangeable dans la liaison existant entre la partie de châssis (9) et l'autre dispositif de travail (23).

11. Machine agricole selon l'une quelconque des revendications précédentes, caractérisée en ce que les organes de travail (7) de la machine sont des organes rotatifs de travail du sol pouvant être entraînés, supportés par palier dans le châssis de la machine.

12. Machine agricole selon l'une quelconque des revendications précédentes, caractérisée en ce que l'autre dispositif de travail (23) comporte un élément d'accrochage (24) s'étendant sensiblement horizontalement, transversalement à la direction de déplacement A, pour maintenir le sol travaillé dans la plage d'actionnement des organes de travail (7) et pour laisser le sol travaillé dans un état nivelé.
